# FASCICULE DE BREVET EUROPEEN

(11) **EP 3 744 180 B1**
(45) Date de publication et mention de la délivrance du brevet: **25.03.2026**
(21) Numéro de dépôt: 20176615.1
(22) Date de dépôt: 26.05.2020
(51) Int. Cl.: A22C 7/00

(54) **PROCÉDÉ DE CONDITIONNEMENT DE VIANDE HACHÉE ET INSTALLATION DE MISE EN OEUVRE DU PROCÉDÉ**
VERFAHREN ZUM VERPACKEN VON HACKFLEISCH, UND ANLAGE ZUR UMSETZUNG DIESES VERFAHRENS
METHOD FOR PACKAGING GROUND MEAT AND INSTALLATION FOR IMPLEMENTING THE METHOD

(30) Priorité: 27.05.2019 FR 1905608
(43) Date de publication de la demande: 02.12.2020
(73) Titulaire: Charal, 49300 Cholet (FR)
(72) Inventeur: HAMEL, Fanny, 61220 Le Menil De Briouze (FR)
(74) Mandataire: Fédit-Loriot

(56) Documents cités:
- FR-A1- 2 609 600
- FR-A1- 2 713 047
- US-A- 4 106 162
- US-A1- 2018 184 672

## Description

La présente invention se rapporte à un procédé de conditionnement de viande hachée et à une installation de mise en œuvre du procédé.

Il est connu de conditionner des préparations à base de viande hachée sous forme de portion aplatie en galette épaisse d'un poids compris généralement entre 50 g et 150 g. Pour ce faire, la préparation de viande hachée est fractionnée, et les fractions sont comprimées dans un moule leur conférant leur forme unitaire définitive. Les documents US 4 100 162 et US 2018/184672 décrivent, conformément au préambule de la revendication 1, des dispositifs permettant de former des portions de viande hachée aplaties. Ces portions aplaties sont ensuite destinées à être cuites pour la consommation. La production industrielle de ces portions aplaties, usuellement dénommées « steak haché », permettait originellement de pouvoir consommer les parties moins nobles des animaux, par exemple des bovins.

Au cours du temps, le steak haché s'est imposé notamment avec le développement de la restauration rapide, et plus précisément du hamburger, constitué de deux pains ronds superposés, entre lesquels on insère notamment un steak haché cuit.

Aussi, les exigences des consommateurs se sont accrues et des réglementations sanitaires se sont imposées afin de garantir des qualités nutritionnelles et organoleptiques aux steaks hachés. Par exemple, dans certains pays, le rapport en poids des tissus conjonctifs et des protéines dans le steak doit être de 15 % et la proportion de sel ne doit pas dépasser 1 %. En outre, le pourcentage en poids de matière grasse est réglementé et il est par exemple compris entre 5 % et 20 % selon les qualités de steak et les pays. Il est en effet tentant pour les industriels d'ajouter de la matière grasse pour diminuer le coût unitaire des steaks hachés.

De plus, dans un environnement concurrentiel, les industriels ont dû imaginer de nouvelles préparations de viande hachée présentant des propriétés organoleptiques nouvelles pour pouvoir se différencier sur leurs marchés, tant pour les steaks hachés dédiés à la restauration rapide que ceux destinés à une consommation classique.

Aussi, un problème qui se pose et que vise à résoudre la présente invention est de fournir un procédé et une installation pour le mettre en œuvre, qui permettent de produire des portions de viande hachée présentant de nouvelles propriétés organoleptiques.

Dans ce but, et selon un premier objet, il est proposé un procédé de conditionnement de viande hachée selon la revendication 1.

Ainsi, une caractéristique de l'invention réside dans le moulage particulier d'au moins une des surfaces de la portion de viande hachée lui conférant des portions locales en saillie. Autrement dit, on vient fragmenter la surface de la portion de viande hachée aplatie ce qui, après cuisson, provoque dans la bouche des stimuli mécaniques venant modifier la perception gustative et confère une meilleure sensation du goût comme on l'expliquera ci-après dans la description détaillée. De plus, l'épaisseur apparente de la portion de viande hachée est plus importante pour une même quantité en poids de viande hachée, ce qui présente un avantage lorsqu'elle est mise en œuvre dans un hamburger. Au surplus, les portions de viande hachée étant cuites à l'horizontale, les jus qui exsudent en surface durant la cuisson, demeurent à la surface, contenus qu'ils sont par la bordure en saillie. Conséquemment, on obtient des portions de viande hachée cuites plus moelleuses en bouche.

Aussi, grâce au moulage particulier de l'une des surfaces de la portion de viande hachée, on augmente précisément sa surface globale à l'air libre, de telle sorte que la cuisson ultérieure de cette surface augmentée génère une plus grande quantité de composés olfactifs par unité de poids, notamment ceux issus des réactions de Maillard, ce qui accroît les stimuli chimiques des récepteurs olfactifs et gustatifs en bouche.

En outre, selon une première variante d'exécution de l'invention, à l'étape b), on moule ladite au moins une desdites surfaces en formant des protubérances autour de chacune desdites premières portions de surface. Ainsi, les protubérances définissent les portions de surface en saillie par rapport aux autres portions de surface. La surface est moulée en formant des protubérances préférentiellement de forme générale tronconique, et à base circulaire. De la sorte, le démoulage est rendu plus aisé comme on l'expliquera ci-après. L'extrémité libre des protubérances est avantageusement arrondie ce qui facilite de la même façon le démoulage.

Préférentiellement, on moule la surface en formant des protubérances de différents volumes en conservant une même hauteur. On obtient de la sorte une portion de viande hachée présentant des hétérogénéités mécaniques de surface. Ainsi, de telles portions de viande hachée confèrent en bouche différentes sensations locales.

En outre, on moule préférentiellement ladite au moins une desdites surfaces en formant lesdites secondes portions de surface en saillies régulièrement réparties sur ladite au moins une desdites surfaces. On entend par régulièrement réparties, des secondes portions en saillies disséminées sur toute la surface des portions de viande, mais non nécessairement selon un motif régulier. Ainsi, les premières parties de surface, peuvent être entourées de secondes portions, lorsqu'il s'agit de protubérances, de trois portions, de quatre portions ou même de cinq portions.

Par ailleurs, et selon un autre mode de mise en œuvre particulièrement avantageux, à l'étape b), on moule ladite au moins une desdites surfaces en formant une bordure en saillie le long dudit bord de ladite portion de viande hachée, aussi bien dans la première variante d'exécution de l'invention que dans la seconde.

Selon un deuxième objet, tel que défini dans la revendication 4, la présente invention propose une portion de viande hachée aplatie conditionnée conformément au procédé décrit ci-dessus. Ladite portion de viande hachée aplatie présentant deux surfaces opposées et un bord, et au moins l'une desdites surfaces présente, d'une part des premières portions de surface et des secondes portions de surface étendues en saillies autour de chacune desdites premières portions de surface et d'autre part une bordure en saillie le long dudit bord de ladite portion de viande hachée.

Aussi, la portion de viande hachée aplatie présente tous les avantages décrits ci-dessus, après qu'elle a été cuite, durant sa dégustation.

Selon un troisième objet, tel que défini dans la revendication 5, la présente invention propose une installation pour la mise en œuvre du procédé de conditionnement de viande hachée tel que décrit ci-dessus. Ladite installation comprenant : un dispositif pour fournir une préparation à base de viande hachée ; un dispositif de conditionnement pour conditionner au moins une fraction de ladite préparation de viande hachée en formant une portion de viande hachée aplatie présentant deux surfaces opposées et un bord. Et ledit dispositif de conditionnement comprend une cavité de moulage ouverte comportant un fond présentant une empreinte prédéterminée pour mouler au moins l'une desdites surfaces de ladite portion de viande hachée de façon à former des premières portions de surface et des secondes portions de surface étendues en saillie autour de chacune desdites premières portions de surface. En outre, ladite empreinte présente des portions en creux, et de plus, la cavité de moulage présente une rainure circulaire entourant la pluralité de portions en creux et sensiblement d'une même profondeur. Ainsi, la rainure circulaire présente une profondeur sensiblement égale à la profondeur des portions en creux. De la sorte, on moule ladite au moins une desdites surfaces en formant une bordure en saillie le long dudit bord de ladite portion de viande hachée.

L'installation objet de l'invention permet ainsi de mettre en œuvre le procédé conforme à l'invention, et elle vise à l'industrialiser. Aussi, le dispositif pour fournir la préparation de viande hachée peut comprendre, selon une variante de réalisation, un organe de coupe et d'amenée permettant de hacher la viande et de la transférer directement jusqu'au dispositif de conditionnement lequel comporte, selon un mode de mise en œuvre particulièrement avantageux au moins une cavité de moulage ménagée à la surface d'un support cylindrique. Le support cylindrique est entraîné en rotation en continu, et il vient transférer les portions de viande hachée reçues dans la cavité sur une bande transporteuse. La cavité de moulage présente alors un fond dans lequel est ménagée une empreinte correspondant à la conformation que l'on souhaite donner à l'une des surfaces de la portion de viande hachée. Ainsi, la préparation de viande hachée déversée dans la cavité y est tassée de manière à y être moulée pour pouvoir épouser les reliefs de ladite empreinte. On obtient de la sorte à la surface de la portion de viande hachée en contact avec le fond des premières portions de surface et des secondes portions de surface étendues en saillie autour de chacune desdites premières portions de surface.

Aussi, ladite empreinte présente avantageusement des portions en creux pour former lesdites secondes portions de surface.

Selon une autre variante de réalisation, le dispositif pour fournir la préparation de viande hachée comporte une trémie à l'intérieur de laquelle est stockée la viande préalablement hachée, et un dispositif pour l'acheminer jusqu'au dispositif de conditionnement, comme on l'expliquera plus en détail dans la suite de la description.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
[Fig. 1] est une vue schématique d'une installation de conditionnement conforme à l'invention ;
[Fig. 2] est une vue schématique de détail d'un élément de l'installation représenté sur la figure [Fig. 1] et selon une première variante d'exécution ;
[Fig. 3] est une vue schématique de dessus du produit obtenu grâce à l'installation représentée sur la figure [Fig. 1] et à l'élément de détail représenté sur la figure [Fig. 2] ;
[Fig. 4] est une vue schématique partielle de dessus d'un produit obtenu conformément à l'invention selon une deuxième variante d'exécution ;
[Fig. 5] est une vue schématique de dessus d'un produit obtenu conformément à l'invention selon une troisième variante d'exécution ; et,
[Fig. 6] est un organigramme des étapes de mise en œuvre du procédé de conditionnement selon l'invention.

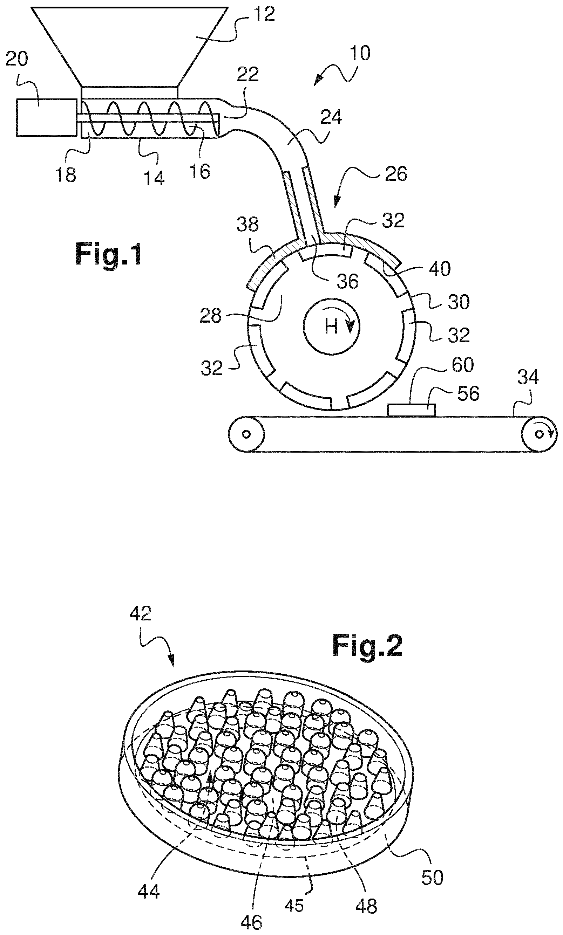

La Figure 1 montre schématiquement une installation 10 de conditionnement de viande hachée conforme à l'invention, selon une première variante de réalisation. Ainsi, installation 10 comprend, en amont, une trémie 12 dans laquelle est déversée la viande et les additifs usuels tel du sel par exemple. La trémie 12 débouche dans un conduit de réception 14 sensiblement horizontal et situé à l'aplomb de la trémie 12. Le conduit de réception 14 comporte à l'intérieur, une vis sans fin 16, et il présente une première extrémité 18 équipée d'une motorisation 20 pour entraîner en rotation la vis sans fin 16, et à l'opposé, une seconde extrémité 22 débouchant dans une tubulure de distribution 24. Avantageusement, la seconde extrémité 22 est équipée d'une grille et d'une lame de coupe solidaire en rotation de la vis sans fin 16 et non représentées sur la figure [Fig. 1]. De la sorte, la double action de la vis sans fin 16 et de la lame de coupe permet de hacher la viande et de l'entraîner à force à travers la grille. De la sorte, en aval de la grille, on obtient une préparation de viande hachée qui va pouvoir être entraînée à travers la tubulure de distribution 24 comme on l'expliquera ci-après. Cette tubulure de distribution se prolonge par une rampe de distribution 26 appuyée contre un tambour 28. Ce dernier présente une surface externe cylindrique 30 dans laquelle sont ménagés des logements circulaires 32. Le tambour 28 est adapté à être entraîné en rotation dans le sens horaire H au-dessus d'une bande transporteuse de réception 34.

La rampe de distribution 26 se termine par un bec d'injection 36 destiné à venir au droit des logements circulaires 32. Et elle présente une garniture 38 s'étendant autour du bec d'injection 36 et coopérant avec la surface externe cylindrique 30 du tambour 28 pour assurer l'étanchéité entre la rampe de distribution 36 et le tambour 28. Aussi, la garniture 38 présente une surface cylindrique interne 40 de même courbure que celle de la surface externe cylindrique 30 du tambour 28 de manière à s'appliquer parfaitement et de manière étanche sur la surface externe cylindrique 30 et en particulier lorsque le tambour 28 est entraîné en rotation comme on l'expliquera ci-après.

Les logements circulaires 32 sont adaptés à recevoir des moules du type représenté sur la figure [Fig. 2]. Ainsi, cette dernière figure illustre un moule circulaire 42, vu de dessous, et présentant une cavité de moulage 44 de forme circulaire. Cette dernière présente une paroi de fond 46 dans laquelle est ménagée une empreinte comportant une pluralité de portions en creux 48 de forme générale sensiblement tronconique.

Au surplus, la cavité de moulage 44 présente une rainure circulaire 50 entourant la pluralité de portions en creux 48 et sensiblement d'une même profondeur. Autrement dit, la rainure circulaire 50 présente une profondeur sensiblement égale à la profondeur des portions en creux. Elle présente également, selon une coupe axiale, un profil en V dissymétrique.

En outre, la paroi de fond 46 telle que représentée sur la figure [Fig. 2], est bordée par la rainure circulaire en formant une arête 45. Selon un autre mode de mise en œuvre de l'invention, non représenté, ladite arête est arrondie. Elle présente un rayon de 3 mm par exemple, selon un plan axial du moule circulaire. Comme on l'expliquera ci-après, une telle forme d'arête permet non seulement un meilleur remplissage, mais aussi, un meilleur démoulage.

Au surplus, selon un mode de réalisation particulièrement avantageux, le moule présentant un bord circulaire définissant un plan moyen de bord, la paroi de fond de la cavité de moulage est sensiblement inclinée par rapport audit plan moyen. De la sorte, la cavité de moulage est plus mince d'un côté du moule et plus épaisse de l'autre côté diamétralement opposé. On expliquera ci-après les avantages d'un tel moule.

Aussi, la rainure circulaire est avantageusement plus large du côté plus épais du moule pour faciliter le remplissage du moule.

Les portions en creux 48, sont de forme générale tronconique à base circulaire, mais elles n'ont toutefois pas toutes les mêmes dimensions excepté la profondeur. Ainsi, leur conicité est plus ou moins prononcée, et le diamètre au niveau de la paroi de fond 46 varie de plus ou moins 5 %. Par ailleurs, les portions en creux 48 présentent des fonds arrondis dont les courbures sont non identiques.

Par ailleurs, on observera que la distribution des portions en creux 48 dans la paroi de fond 46 est non uniforme. Autrement dit, les portions en creux 48 ne sont pas alignées selon des directions particulières.

Ainsi, les logements circulaires 32 illustrés sur la figure [Fig. 1] reçoivent chacun un moule circulaire 42 du type illustré sur la figure [Fig. 2], et il y est solidarisé par des moyens appropriés, par exemple des moyens de vissage non représentés. On observera que le diamètre des logements circulaires 32 correspond précisément au diamètre extérieur des moules circulaires 42 de manière à ce que ces derniers puissent y être ajustés très précisément sans jeu.

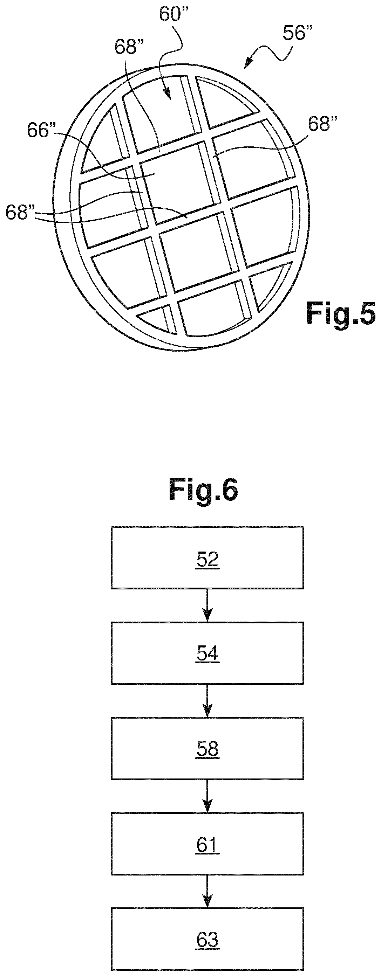

On se référera à présent, non seulement à l'organigramme représenté sur la figure [Fig. 6], mais aussi à la figure [Fig. 1], montrant l'installation pour décrire le procédé de conditionnement conforme à l'invention et selon cette première variante de réalisation.

Ainsi, conformément à une première étape 52, on fournit une préparation à base de viande hachée, dans le conduit de réception 14 grâce à la vis sans fin 16 et à la lame de coupe mobile en rotation contre la grille. De la sorte la préparation de viande hachée s'écoule en aval de la grille dans la tubulure de distribution 24, sous la forme d'une masse de viande cohésive jusqu'au bec d'injection 36.

De la sorte, telle que représentée sur la figure [Fig. 1], la préparation de viande hachée sous pression au niveau du bec d'injection 36, se déverse à l'intérieur de la cavité de moulage 44 du moule 42 installé dans le logement 32 en regard du bec d'injection 36. Le remplissage de la cavité de moulage 44 a lieu à mesure que le tambour 28 est entraîné en rotation dans le sens horaire. Ainsi selon une deuxième étape 54, on moule une fraction de préparation de viande hachée à l'intérieur de la cavité de moulage 44. La préparation de viande hachée est alors forcée sous pression à l'intérieur de la cavité de moulage 44 et elle pénètre à la fois dans les portions en creux 48 de la pluralité de portions en creux ainsi que dans la rainure circulaire 50 qui les entoure.

A mesure que la cavité de moulage 44 se remplit, le moule 42 est entraîné en rotation, et la surface cylindrique interne 40 de la garniture 38 vient alors refermer la cavité de moulage 44 en conformant une première surface sensiblement lisse de la portion de viande hachée logée dans la cavité de moulage 44, tandis qu'une seconde surface opposée est moulée dans les portions en creux 48 et la rainure circulaire 50.

Le tambour 28 poursuit sa rotation et tandis qu'une portion de viande hachée aplatie 56 moulée dans la cavité de moulage 44 se démoule et échoue, dans une troisième étape 58, sur la bande transporteuse de réception 34, les cavités des autres moules se remplissent de la même façon.

Le débit de préparation de viande hachée dans la tubulure de distribution 24 est ajusté en fonction de la vitesse de rotation du tambour 28, de manière à ce que la quantité de préparation de viande hachée transformée en portions de viande hachée 56 par unité de temps, soit égale à la quantité de viande hachée produite en amont de la tubulure de distribution 24.

Par ailleurs, lorsque la cavité de moulage est plus mince d'un côté du moule et plus épaisse de l'autre, selon le mode de réalisation particulièrement avantageux précité, le moule est ajusté dans les logements circulaires de façon que le côté mince soit ajusté vers l'avant, soit en amont par rapport au sens de rotation du tambour, tandis que le côté épais est orienté vers l'arrière, soit en aval. Partant, les portions de viande hachée présentent un côté épais et un côté diamétralement opposé plus mince. Ainsi, compte tenue des contraintes différentielles qui s'exercent sur la préparation de viande hachée durant le remplissage des moules, entre l'amont et l'aval, grâce à la différence d'épaisseur, les portions de viande hachée vont retrouver une épaisseur sensiblement constante à la cuisson. Car en effet, sans cette précaution de mise en forme de la préparation de viande hachée, les portions de viande hachée cuites sont plus épaisses d'un côté que de l'autre.

Selon une deuxième variante de réalisation de l'invention, non représentée, la viande hachée est préparée en amont indépendamment du cycle de moulage des portions de viande hachée. Par conséquent, l'installation de conditionnement est sensiblement adaptée et on s'affranchit d'une vis sans fin couplée à une lame de coupe et à une grille pour hacher la viande in situ. La préparation de viande hachée est alors stockée dans une trémie située au droit de la rampe de distribution. Aussi, la rampe de distribution est alimentée avec la préparation de viande hachée au moyen de deux canaux ajustés en V et dans lesquels la préparation se déverse depuis la trémie. La préparation de viande hachée qui se déverse dans les canaux est alors entraînée alternativement vers la rampe de distribution au moyen de deux pistons respectivement installées dans les canaux. Et ainsi, la préparation de viande hachée vient garnir les moules depuis la rampe de distribution appuyée contre le tambour. Grâce à une telle mise en œuvre, de moindre contraintes s'exercent sur la préparation de viande hachée pour garnir les moules, et conséquemment, lui conserve autant que faire se peut sa texture.

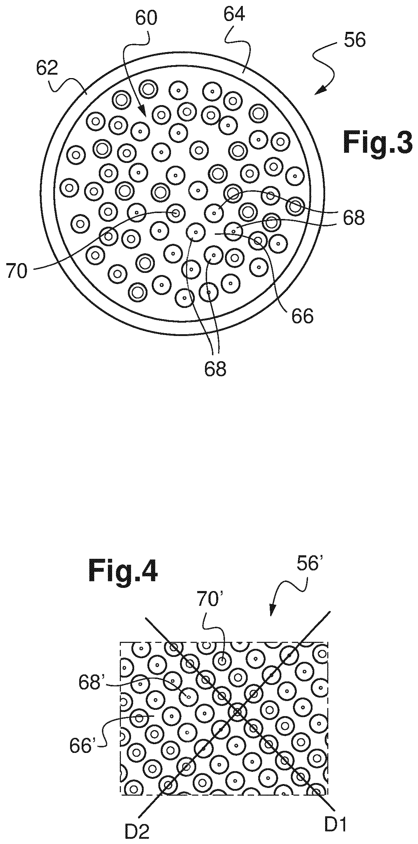

Ainsi, dans l'une ou l'autre des variantes de réalisation, la portion de viande hachée 56 échoue sur la bande transporteuse de réception 34, de façon que sa première surface sensiblement lisse vienne s'appliquer contre la bande transporteuse de réception 34, tandis qu'une seconde surface opposée 60 libre, présente les empreintes de la cavité de moulage 44 comme on va l'expliquer ci-après en référence à la figure [Fig. 3]. La portion de viande hachée 56 peut par exemple, être surgelée dans une quatrième étape 61, puis emballée dans une cinquième étape 63. Ces dernières étapes ne sont pas nécessairement mises en œuvre dans la même unité de temps que celle de la production des portions de viande hachée. Ces dernières peuvent par exemple être stockées avant d'être emballées.

La figure [Fig. 3] illustre vu de dessus, la portion de viande hachée 56 obtenue selon le procédé décrit ci-dessus et conforme à l'invention. Ainsi, apparaît la seconde surface 60 entourée d'un bord 62. Grâce à la 50 du moule 42, la seconde surface 60 présente une bordure en saillie 64, s'étendant le long dudit bord 62 et formant un rebord. En outre, grâce aux portions en creux 48 de l'empreinte 44 ménagée dans la paroi de fond 46 du moule 42, la seconde surface 60 présente des premières portions de surface 66 définissant un premier plan moyen P1m et des secondes portions de surface 68 s'étendant en saillie autour des premières portions de surface 66, en formant des protubérances 70. Ces protubérances 70 présentent une forme complémentaire de celle des portions en creux 48 de l'empreinte 44.

Partant, les protubérances 70 présentent une hauteur voisine de la hauteur de la bordure en saillie 64. Au surplus, elles sont implantées de manière non régulière sur la seconde surface 60. On expliquera dans la suite de la description comment elles contribuent aux propriétés organoleptiques de la portion de viande hachée 56 après préparation.

Selon une deuxième variante d'exécution de l'invention, on met en œuvre des moules dont l'empreinte comporte des portions en creux de forme analogue à celles des portions en creux du moule 42 illustré sur la figure [Fig. 2] mais dont la répartition est régulière. Les protubérances 70' alors obtenues sur la portion de viande hachée 56' illustrée sur la figure [Fig. 4] sont alors alignées selon deux directions sensiblement perpendiculaires D1, D2.

Aussi, selon une troisième variante d'exécution de l'invention, on met en œuvre des moules dont l'empreinte comporte des portions en creux sous forme de rainures croisées. De la sorte, on obtient une portion de viande hachée 56" telle que représentée sur la figure [Fig. 5] dont la seconde surface 60" présente des premières portions de surface 66" définissant un second plan moyen P2m et des secondes portions de surface 68" formant nervures et s'étendant en saillie autour des premières portions de surface 66".

Les portions de viande hachée 56, 56', 56" obtenues selon les variantes d'exécution précitées sont destinées à être exposées à la chaleur pour subir une cuisson alimentaire. Leurs propriétés de surface dues au procédé de conditionnement objet de l'invention, leur confère des propriétés organoleptiques clairement établies par des tests de dégustation que l'on décrira ci-après. Ces propriétés organoleptiques particulières provoquent des stimuli dans la sphère sensorielle, tant chimiques que mécaniques. Précisément, grâce au procédé de conditionnement selon l'invention, la densité moyenne de la surface des portions de viande hachée est de l'ordre de 0,6, tandis que la densité moyenne à cœur est de 1,1. Partant, la différence de densité entre la surface et le cœur des portions de viande hachée provoque un stimuli d'ordre mécanique particulièrement distinctif et avantageux.

Ainsi, les tests de dégustation ont été réalisés auprès d'un panel de quatre-vingts adultes, acheteur et consommateurs réguliers de « cheeseburger » frais, soit de hamburgers dans lesquels une tranche de fromage est déposée sur la portion de viande hachée. Parmi le panel des quatre-vingts adultes, 18 % avaient moins de 35 ans, 37 % avaient un âge compris entre 35 et 49 ans, 35 % avaient un âge compris entre 50 et 64 ans et 10 % avaient un âge supérieur à 65 ans. De surcroît, 51 % vivaient dans un foyer avec enfants, tandis que 49 % vivaient seuls ou en couple sans enfant.

Les acteurs du panel devaient déguster ainsi, un « cheeseburger » témoin, dénommé «témoin» dans la suite de la description, dont la portion de viande hachée présentait deux surfaces opposées lisses, et un « cheeseburger » d'essai, dénommé «essai», dont la portion de viande hachée est l'objet de l'invention conformément à la première variante de réalisation. On observera que le « cheeseburger » est maintenu durant tout son processus d'élaboration, de manière à ce que la surface moulée de la portion de viande hachée soit située au-dessus et accueille la tranche de fromage. Aussi, la portion de viande hachée est cuite par conduction avant le montage du « cheeseburger », la tranche de fromage étant amenée à fondre ensuite sur la surface de la portion de viande hachée.

Tout d'abord, il a été demandé à tous les acteurs du panel quelle était leur préférence entre le témoin et l'essai, quel était celui qui était le plus généreux en viande et si la couleur de la viande correspondait à l'idée que l'acteur du panel se faisait d'une viande de bœuf. Ainsi, 64 % des acteurs ont préféré l'essai, 74 % d'entre eux ont considéré qu'il était généreux en viande et 78 %, que la couleur de la viande correspondait à l'idée qu'ils se faisaient une viande de bœuf.

Ensuite, concernant précisément la viande, quatre critères ont été choisis concernant la texture de la viande, la cuisson de la viande, le goût global de la viande et le goût grillé de la viande. Et sur ces quatre critères, respectivement trois appréciations devaient être faites, entre, trop ferme, juste bien, ou trop moelleuse pour la texture de la viande ; entre pas assez cuite, juste bien ou trop cuite pour la cuisson de la viande ; entre pas assez prononcé, juste bien ou trop prononcé s'agissant du goût global de la viande ; et entre pas assez prononcé, juste bien ou trop prononcé quant au goût grillé de la viande.

Ainsi, s'agissant du premier critère, la texture de la viande, parmi les acteurs du panel, et en regard du témoin, 55 % l'ont jugée juste bien, tandis que 31 % l'ont jugée trop ferme et 14 % trop moelleuse. En revanche, en regard de l'essai, 68 % l'ont jugée juste bien, tandis que 10 % l'ont jugée trop ferme et 23 % trop moelleuse.

S'agissant du deuxième critère, la cuisson de la viande, parmi les acteurs du panel et en regard du témoin, 56 % l'ont jugée juste bien, tandis que 8 % l'ont jugée pas assez cuit et 36 % trop cuite. En regard de l'essai, 68 % l'ont jugée juste bien, tandis que 14 % l'ont jugée pas assez cuite et 19 % trop cuite.

Concernant le troisième critère, le goût global de la viande, parmi les acteurs du panel et en regard du témoin, 53 % l'ont jugé juste bien, tandis que 45 % l'ont jugé pas assez prononcé et 3 % trop prononcé. En regard de l'essai, 64 % l'ont jugé juste bien, tandis que 29 % l'ont jugé pas assez prononcé et 8 % trop prononcé.

Quant au quatrième critère, le goût grillé de la viande, en regard du témoin, 35 % l'ont jugé juste bien, tandis que 64 % l'on jugé pas assez prononcé et 1 % trop prononcé. En regard de l'essai, 43 % l'ont jugé juste bien, tandis que 53% l'ont jugé pas assez prononcé et 5 % trop prononcé.

Ainsi, le « cheeseburger » d'essai est très significativement préféré au « cheeseburger » témoin. En effet, la portion de viande hachée objet de l'invention retient bien mieux les jus de viande que les portions de viande classique. La retenue des jus de viande est plus encore améliorée grâce au rebord qui s'étend dans la bordure de la portion de viande hachée. Et aussi, le fromage vient s'écouler entre les protubérances et y demeure sans s'écouler lui non plus au-delà de la portion de viande. Dans cette alliance entre le jus de viande et le fromage fondu naissent de nouvelles saveurs qui améliorent le goût. Ensuite, grâce à l'augmentation de la surface spécifique de la portion de viande hachée, la cuisson génère une plus grande quantité de composés olfactifs issus notamment des réactions de Maillard. Partant, le goût grillé est plus perceptible. De surcroît, grâce à sa surface plus aérée, une quantité de viande hachée équivalente confère une générosité de produit plus élevée à la portion de viande hachée. Enfin, il s'avère que la nouvelle texture de la viande conférée par cette nouvelle surface est appréciée des acteurs du panel.

Aussi, on obtient des résultats comparables quant au test de dégustation, avec les portions de viande hachée 56', 56" selon les autres variantes de réalisation.

## Revendications

1. Procédé de conditionnement de viande hachée comprenant les étapes suivantes :
- a) on fournit une préparation à base de viande hachée ;
- b) on conditionne au moins une fraction de ladite préparation de viande hachée en formant une portion de viande hachée (56 ; 56') aplatie présentant deux surfaces opposées et un bord, et on moule au moins l'une desdites surfaces (60 ; 60'), pour former une bordure en saillie (64) le long dudit bord (62) de ladite portion de viande hachée ;
**caractérisé en ce qu'**à l'étape b) on moule en outre ladite au moins une desdites surfaces pour former des premières portions de surface (66) et des secondes portions de surface (68) formant des protubérances (70) étendues en saillies, autour de chacune desdites premières portions de surface (66) et régulièrement réparties sur ladite au moins une desdites surfaces, et pour former une bordure circulaire en saillie formant un rebord autour desdites premières (66) et secondes (68) portions de surfaces, le moulage particulier de ladite au moins une des surfaces de la portion de viande hachée lui conférant des portions locales en saillie d'une hauteur sensiblement égale à celle du rebord.

2. Procédé de conditionnement selon la revendication 2, **caractérisé en ce qu'**à l'étape b) on moule ladite au moins une desdites surfaces (60 ; 60') en formant des protubérances sensiblement tronconiques à base circulaire (70 ; 70').

3. Procédé de conditionnement selon la revendication 1 ou 2, **caractérisé en ce qu'**à l'étape b) on moule la surface en formant des protubérances de différents volumes en conservant une même hauteur.

4. Portion de viande hachée (56 ; 56') aplatie **caractérisée en ce qu'**elle est conditionnée conformément au procédé selon l'une des revendications 1 à 3, ladite portion de viande hachée (56 ; 56') aplatie présentant d'une part deux surfaces opposées et un bord et d'autre part une bordure en saillie (64) le long dudit bord (62) de ladite portion de viande hachée,
dans laquelle au moins l'une desdites surfaces (60 ; 60') présente des premières portions de surface (66 ; 66') et des secondes portions de surface (68 ; 68') formant des protubérances (70) étendues en saillies autour de chacune desdites premières portions de surface (66 ; 66').

5. Installation pour la mise en oeuvre du procédé de conditionnement de viande hachée selon l'une quelconque des revendications 1 à 4, ladite installation comprenant :
- un dispositif pour fournir une préparation à base de viande hachée ;
**caractérisée en ce qu'**elle comprend un dispositif de conditionnement pour conditionner conformément au procédé selon l'une des revendications 1 à 3 au moins une fraction de ladite préparation de viande hachée en formant une portion de viande hachée (56) aplatie présentant deux surfaces opposées et un bord ;
ledit dispositif de conditionnement comprend une cavité de moulage (44) ouverte comportant un fond (46) présentant une empreinte prédéterminée, ladite empreinte présentant des portions en creux (48) pour mouler au moins l'une desdites surfaces (60) de ladite portion de viande hachée (56) de façon à former des premières portions de surface (66) et des secondes portions de surface (68) étendues en saillie autour de chacune desdites premières portions de surface (66) ;
et la cavité de moulage (44) présente une rainure circulaire (50) entourant la pluralité de portions en creux (48) et sensiblement d'une même profondeur.

6. Installation selon la revendication 5, **caractérisée en ce que** la cavité de moulage présente un bord circulaire définissant un plan moyen de bord, le fond de la cavité de moulage étant sensiblement inclinée par rapport audit plan moyen.

## Patentansprüche

1. Verfahren zum Verpacken von Hackfleisch, umfassend die folgenden Schritte:
- a) Bereitstellen einer Zubereitung auf Hackfleischbasis;
- b) Verpacken mindestens eines Teils der Hackfleischzubereitung durch Bilden einer abgeflachten Hackfleischportion (56; 56') mit zwei gegenüberliegenden Oberflächen und einer Kante, und Formen mindestens einer der Oberflächen (60; 60'), um einen vorstehenden Rand (64) entlang der Kante (62) der Hackfleischportion zu bilden;
**dadurch gekennzeichnet, dass** in Schritt b) ferner mindestens eine der Oberflächen geformt wird, um erste Oberflächenabschnitte (66) und zweite Oberflächenabschnitte (68) zu bilden, die Vorsprünge (70) bilden, die sich um jeden der ersten Oberflächenabschnitte (66) erstrecken und gleichmäßig über die mindestens eine der Oberflächen verteilt sind, und um einen vorstehenden kreisförmigen Rand zu bilden, der eine Umrandung um die ersten (66) und zweiten (68) Oberflächenabschnitte bildet, wobei das besondere Formen der mindestens einen der Oberflächen des Hackfleischabschnitts diesem lokale vorstehende Abschnitte mit einer Höhe verleiht, die im Wesentlichen der Höhe der Umrandung entspricht.

2. Verpackungsverfahren nach Anspruch 1, **dadurch gekennzeichnet, dass** in Schritt b) mindestens eine der Oberflächen (60; 60') durch Bilden von im Wesentlichen konischen Vorsprüngen mit kreisförmiger Basis (70; 70') geformt wird.

3. Verpackungsverfahren nach Anspruch 1 oder 2, **dadurch gekennzeichnet, dass** in Schritt b) die Oberfläche durch Bilden von Vorsprüngen unterschiedlichen Volumens unter Beibehaltung derselben Höhe geformt wird.

4. Abgeflachter Hackfleischabschnitt (56; 56'), **dadurch gekennzeichnet, dass** er gemäß dem Verfahren nach einem der Ansprüche 1 bis 3 verpackt ist, wobei der abgeflachte Hackfleischabschnitt (56; 56') einerseits zwei gegenüberliegende Oberflächen und eine Kante und andererseits einen vorstehenden Rand (64) entlang der Kante (62) des Hackfleischabschnitts aufweist, wobei mindestens eine der Oberflächen (60; 60') erste Oberflächenabschnitte (66; 66') und zweiten Oberflächenabschnitten (68; 68') aufweist, die Vorsprünge (70) bilden, die sich um jeden der ersten Oberflächenabschnitte (66; 66') vorstehend erstrecken.

5. Anlage zum Durchführen des Verfahrens zum Verpacken von Hackfleisch nach einem der Ansprüche 1 bis 4, wobei die Anlage Folgendes umfasst:
- eine Vorrichtung zum Bereitstellen einer Zubereitung auf Hackfleischbasis;
**dadurch gekennzeichnet, dass** sie eine Verpackungsvorrichtung umfasst, um gemäß dem Verfahren nach einem der Ansprüche 1 bis 3 mindestens einen Teil der Hackfleischzubereitung zu verpacken, indem sie eine abgeflachte Hackfleischportion (56) bildet, die zwei gegenüberliegende Oberflächen und eine Kante aufweist;
die Verpackungsvorrichtung einen offenen Formhohlraum (44) umfasst, der einen Boden (46) mit einem vorbestimmten Abdruck aufweist, wobei der Abdruck vertiefte Abschnitte (48) aufweist, um mindestens eine der Oberflächen (60) des Hackfleischabschnitts (56) so zu formen, dass erste Oberflächenabschnitte (66) und zweite Oberflächenabschnitte (68) gebildet werden, die sich um jeden der ersten Oberflächenabschnitte (66) vorstehend erstrecken;
und der Formhohlraum (44) eine kreisförmige Nut (50) aufweist, die die Vielzahl von vertieften Abschnitten (48) umgibt und im Wesentlichen dieselbe Tiefe aufweist.

6. Anlage nach Anspruch 5, **dadurch gekennzeichnet, dass** der Formhohlraum eine kreisförmige Kante aufweist, die eine Mittelebene der Kante definiert, wobei der Boden des Formhohlraums im Verhältnis zu der Mittelebene im Wesentlichen geneigt ist.

## Claims

1. Method for packaging minced meat comprising the following steps:
- a) a preparation based on minced meat is provided;
- b) at least a fraction of said minced meat preparation is packaged by forming a flattened portion of minced meat (56; 56') having two opposite surfaces and an edge, and at least one of said surfaces (60; 60') is moulded, to form a protruding border (64) along said edge (62) of said minced meat portion;
**characterised in that** in step b) said at least one of said surfaces is further moulded to form first surface portions (66) and second surface portions (68) forming protrusions (70) extended in projections, around each of said first surface portions (66) and evenly distributed over said at least one of said surfaces, and to form a circular projecting border forming a rim around said first (66) and second (68) surface portions, the particular moulding of said at least one of the surfaces of the minced meat portion conferring thereon local projecting portions of a height substantially equal to that of the rim.

2. Packaging method according to claim 1, **characterised in that** in step b) said at least one of said surfaces (60; 60') is moulded by forming substantially frustoconical protrusions with a circular base (70; 70').

3. Packaging method according to claim 1 or 2, **characterised in that** in step b) the surface is moulded by forming protrusions of various volumes while retaining the same height.

4. Flattened minced meat portion (56; 56') **characterised in that** it is packaged according to the method according to one of claims 1 to 3, said flattened minced meat portion (56; 56') having on the one hand two opposite surfaces and an edge and on the other hand a projecting border (64) along said edge (62) of said minced meat portion, wherein at least one of said surfaces (60; 60') has first surface portions (66; 66') and second surface portions (68; 68') forming protrusions (70) extending projecting around each of said first surface portions (66; 66').

5. Facility for implementing the ground meat packaging process according to any one of claims 1 to 4, said facility comprising:
- a device for providing a preparation based on minced meat;
**characterised in that** it comprises a packaging device for packaging, in accordance with the method according to one of claims 1 to 3, at least a fraction of said minced meat preparation by forming a flattened portion of minced meat (56) having two opposite surfaces and an edge;
said packaging device comprises an open moulding cavity (44) including a bottom (46) having a predetermined indentation, said indentation having hollow portions (48) for moulding at least one of said surfaces (60) of said minced meat portion (56) so as to form first surface portions (66) and second surface portions (68) projecting around each of said first surface portions (66);
and the moulding cavity (44) has a circular groove (50) surrounding the plurality of hollow portions (48) and substantially of the same depth.

6. Installation according to claim 5, **characterised in that** the moulding cavity has a circular edge defining a mean edge plane, the bottom of the moulding cavity being substantially inclined relative to said mean plane.
